# EUROPEAN PATENT APPLICATION

(11) **EP 2 107 488 A1**
(43) Date of publication of application: **07.10.2009**
(21) Application number: 08251251.8
(22) Date of filing: 31.03.2008
(51) Int. Cl.: G06F 21/00

(54) **Improvements in policy driven computer systems**

(71) Applicant: British Telecommunications Public Limited Company, London EC1A 7AJ (GB)
(72) Inventor: The designation of the inventor has not yet been filed
(74) Representative: Lidbetter, Timothy Guy Edwin

(57) **Abstract**

The invention relates to a method of and apparatus for managing a decision making engine in a policy driven system. In particular the invention provides a method of ensuring one or more of state segregation, resource segregation, and process isolation for a logical instance in a policy based computer system, the method comprising creating a contextualised policy decision point for a logical instance within the policy based computer system, creating a context identifier for the unique logical instance, which context identifier sufficiently characterises the logical instance to ensure at least one of state segregation, resource segregation, and process isolation. The apparatus for a policy based computer system may include a set of computer resources including memory and processors, and one or more associated Policy Decision Points wherein; each logical instance of the system is associated with a contextualised Policy Decision Point which is associated with a context identifier, the context identifier also being associated with a set of policies and computer resources that are unique to the logical instance and are preferably used exclusively for performing the tasks of policy decision making for this logical instance and are isolated from each other, and wherein the context identifier may be further associate with a set of business transactions or a set of users or a set of network resources or any combination of these on which the policies of that logical instance may apply.

## Description

### Technical field

The present invention relates to a method of managing a decision making engine in a policy driven system. In particular, but not exclusively, the invention relates to a method of contextualisation of a request to a policy decision point (PDP) and using said contextualisation to ensure process isolation, state segregation and resource segregation in the resources managed by the PDP.

### Background to the invention

It is known in a computer system to use a Policy Decision Point (PDP) to control access to and make decisions on resources on a computer or network of computers. It is also known for a system to make decisions based on a pre-determined policy, these are known as policy driven systems. Common PDP architecture has at least two types of interface which can be used to access the PDP, an management/administrative interface and a operational interface.

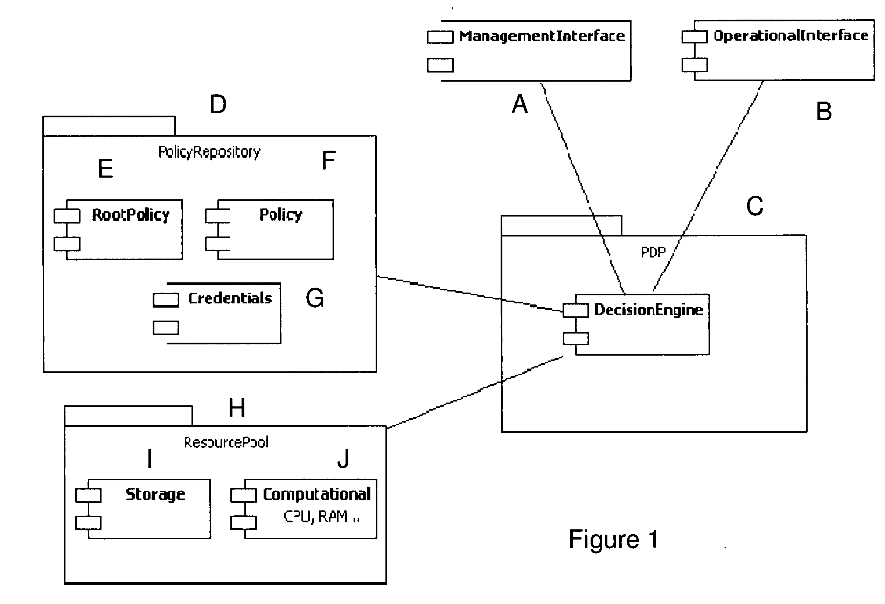

Figure 1 shows the basic architecture of a known policy driven system. There is shown the management interface A, operational interface B, the PDP Decision Engine C, the policy repository D, containing a root policy E, an operating policy F and administrator credentials G, the resources H comprising storage I and computational resources J used by the PDP Decision Engine for is operations such as for performing policy evaluation and decision making.

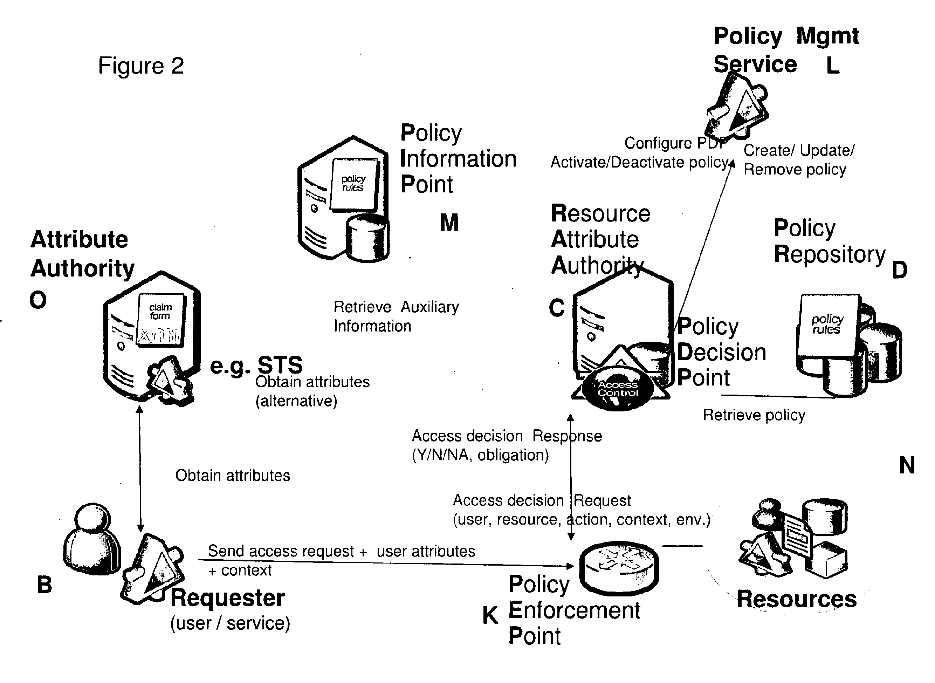

Figure 2 shows the architecture within which a policy driven system is used. The basic architecture may also comprise a Policy Enforcement Point (PEP) which is shown in Figure 2 which is a schematic drawing of a prior art embodiment of access control in a federated environment. Components shown in figure 1 are shown schematically as comprising individual computers having communication pathways enabling access to resources H within the policy based computer system. Here a management service L is shown, the management interface A of figure 1 is represented by the link between the policy decision point (PDP) C and the management service L. Also, the PDP C is shown in communication with a policy enforcement point (PEP) K which controls access to the resources N. The operational interface B of figure1 is represented by the link between PDP C and PEP K. The policy repository D is also shown and as in figure 1, the policy repository comprises the root policy E the operating policy F, and the administrator's credentials G. The decision engine E and the resources H, such as the storage resources I and the computational resources J of figure 1 that are used by the PDP to perform its decision making process are not shown explicitly in figure 2 as they are assumed to be part of the PDP C.

Additionally, a policy information point (PIP) M and an attribute authority (AA) O are provided in Figure 2. The PIP may be used by the PDP in order to obtain auxiliary information that maybe needed during policy evaluation. The AA is provisioning attributes to a requester P, prior to the requester P requesting access to the protected resources N. Alternatively the PDP C may request attributes from O during policy evaluation in order to identify the requester.

If a requester P (not shown in Figure 2) attempts to access a file or resource that is controlled in a policy-based computing environment the request is send to the PEP K. The PEP examines the request sent by P and will transmit information such as the access request, user attributes and credentials to the PDP C through the operational interface B. The PDP C will analyse the request sent by the operational interface B and make a decision as to whether to allow the request or to deny it. The decision is made by consulting the relevant policies in the policy repository D. For instance, the user would have their credentials checked against the user credentials G and their request analysed against existing operating policy F. If the policy evaluation by PDP C concludes that the user credentials G and operating policy F allow the user request this information is transmitted by the PDP C to the PEP K and access is granted to a resources N. If the evaluation of the policies at the policy repository D by the PDP C did not confirm the user's request the PDP C would not grant the user access to the relevant resources N.

The management interface L allows for an administrator with the required credentials G to configure the PDP C and access the policies stored at the repository D used by the PDP for performing its decision making process. The requests from the management interface A are analysed in the same way as from the operational interface B. In general an administrator would be allowed to access the root policy E and would be allowed to modify, add, delete the operating policy F, user credentials G and root policy E.

Such systems as particularly well known in access control systems, where only the root-user(s) is/are allowed to access certain programs or files, identity management in security tokens, where for example, only certain people are allowed access to areas in a building etc.

However, none of the currently known systems provide adequate means for addressing the problem of state segregation, resource segregation and process isolation. This is particularly relevant in situations where the demand on the resources managed by a PDP may be greater than the resources available or where several groups of users may be managing a shared resource and may potentially interfere with each others policy information. For example, in in-sourcing scenarios different customers have outsourced their web-hosted application in third party's data-centres and they are remotely managing access of their clients to the hosted resources. These customers may have conflicting interests but their policies may be executed over the same policy system that uses a pool of shared resources. There is currently no satisfactory way of granting a customer sufficient privileges they require to manage the resource by allowing them access to policies but ensuring that they do not interfere with other customers that use the same policy system. Further examples include use of servers, where several administrators with different projects are attempting to use the same resource. An administrator in this instance, may in such a case attempt to re-write or activate certain policies to ensure the sole use of the resource. Yet another problem is the lack of satisfactory means for the instant creation of a secure PDP for a specific domain or set of business activities. Yet another problem is ensuring that the PDP protecting resources used in one project will not suffer the consequences of a malicious attack, such as a denial of service attack, against resources used in another context, but protected by the same PDP.

It is desirable in these situations to ensure process and state segregation, so that each project, or user, would have dedicated resources for their task and a dedicated set of policies for their resource that can only be changed by allowed persons and more specifically persons to whom the policies are associated with.

### Summary of the invention

The present invention addresses these and other problems in the prior art by expanding the functionality of a PDP. By contextualising the requests made to a PDP with specific policies and resources the invention ensures process isolation and state segregation within the decision engine structure.

The term PDP in the course of the specification is used in its wider sense and is taken to refer to a decision engine that evaluates policies and makes decisions based on the evaluation.

The invention preferably, defines a context that is uniquely identifiable for each logical instance of a policy driven system. In this specification a logical instance is defined as a new set of policy system interfaces, administrator's identities, policies authored by these administrators, decision making processes and resources used by these decision making process, such as memory and computational space used during the execution of a decision making process. A logical instance performs a self-contained collection of policy decision making tasks, such as decision making tasks relating to a specific business activity between partners and protects a logically associated set of network resources. In a preferred embodiment the context is identified with an identifier which is a Universal Unique Identifier (UUID) which has associated with it a set of policies, interfaces and resources which are uniquely attributable to the context with which the UUID is associated. Furthermore, the policies would define a unique PDP for the context. As these policies, interfaces, decision-making process instances and resources they consume are not associated with any other PDP or logical instance, state and process isolation for each instance is provided.

Examples of a business activity include international money transfer between partner banks or accounting activities for a specific project or group of projects, or videoconferencing among peers in a community. Examples of network resources protected or managed by a logical instance include the data and network space offered to a customer by a web-hosting and the collection of services and data hosted for this customer, the collection of information and services offered via a web portal, the collection of printers, scanners, telephones, terminals, servers, etc., that belong to a corporate unit such as an administratively autonomous department, the collection of processes and computational resources used in order to execute security-critical application on a group of devices such as a server or cluster of servers, a computer or a network of computers, a mobile phone or and ad-hoc network of mobile devices, a sensor or a network of sensors, etc.

An aspect of the invention provides a method of ensuring one or more of state segregation and process isolation for one or more logical instances in a policy based system, the method comprising the steps of; creating a context identifier for the policy decision point, the context identifier sufficiently characterising the logical instance and/or policy decision point to ensure state segregation and process isolation.

A further aspect of the invention is provide a method of managing a policy based system the method comprising the steps of; defining an associated Policy Decision Point for each logical instance of the policy based system, the definition of the Policy Decision Point comprising the steps of; identifying each PDP with a context identifier, the context identifier comprising at least one of; one or more sets of management credentials, one or more sets of policies, computational resources, a plurality interface instances comprising at least one management interface and at least one operational interface, and a root policy, defining the Policy Decision Point for the instance based on the context identifier defining a system environment comprising resources and interfaces for each instance based on the context identifier of the associated Policy Decision Point, and resolving any policy decisions for each instance using the associated Policy Decision Point.

Further aspects, features and advantages of the present invention will be apparent from the following description and appended claims.

### Brief description of the drawings

An embodiment of the invention will now be described by way of example only, with reference to the following drawings, in which:
Figure 1 is an example of the PDP architecture as known in the prior art,
Figure 2 is a schematic embodiment of prior art access control in a federated environment,
Figure 3 is an example of the PDP architecture as defined by the invention,
Figure 4 is an example of the structure of a context,
Figure 5 is a example of the creation of a context, and
Figure 6 is a further example of context creation.

### Description of the embodiment

The invention defines a creation model and system architecture which includes the ideas of contextualisation, process isolation resource segregation and state segregation into the existing architecture of a decision engine and PDP.

Figure 2 shows an example of the architecture of a decision engine in an embodiment of the invention. The system could comprise a single computer and/or number of such computers and/or servers and the like operating under a policy driven arrangement. Accordingly, underlying the description which follows, are the requisite electronic components including processors such as central processing units and/or micro processors, being programmable to enable the following functionality. Moreover, components are linked for appropriate communication using internal buss arrangements, wirelessing and/or through other communication paths such as networked communication channels.

There is shown, a computer system 10 upon which there are two logical instances. The features belonging to the first logical instance are numbered from one hundred upwards and the second logical instance from two hundred upwards. There is shown, a set of interfaces for the first logical instance 100 and set of interfaces for the second logical instance 200, each set of interfaces contain operational interfaces 102, 202 and management interfaces 104, 204. Data is transmitted to and from the interfaces of the first logical instance to the Policy Enforcement Point (PEP) 12 at 105 and from the interfaces of the second logical instance at 205. The PEP 12 comprises a Policy Decision Point factory 14 and a decision engine 16. The decision engine comprises separate PDPs for the first logical instance 106 and the second logical instance 206. There is also shown a policy repository 18 which contains the policies for the first logical instance 108 and the policies for the second logical instance 208. Data is transmitted along a communication path 107 to and from the polices of the first logical instance 108 to the PDP of the first logical instance 106 and is transmitted along a communication path 207 to and from the polices of the first logical instance 208 to the PDP of the first logical instance 206. The policies for the first logical instance 108 contain a root policy 110, a set of credentials 112 and a general policy 114. Similarly the policies for the second logical instance 208 contain a root policy 210, a set of credentials 212 and a general policy 214. Furthermore, there is shown the resources of the system 20, including the resources for the first logical instance 116 and resources for the second logical instance 216. The resources allocated to the first logical instance 116 comprise storage 118 and computational resources 120 which may include CPU, RAM, etc. Similarly the resources allocated to the second logical instance 216 comprise storage 218 and computational resources 220.

The features associated with each logical instance in a preferred embodiment are distinct. For example the policies for instance 108, 208 may be different, alternatively they may be identical but are not shared. Each logical instance has a set of interfaces 100, 200 with which to query the Policy Enforcement Point 12. There are two types of interfaces the operational interface 102, 202 and the management interfaces 104, 204. The management interface 104, 204 are able to access some or all of the policies whereas the operational interfaces 102, 202 are not able to access the polices. Any query from an interface group 100, 200 is pushed along communication path 105, 205 to the PEP 12 and analysed by the respective PDP of the logical instances 106, 206. The PDP of the logical instance 106, 206 verify the credentials and the policies for a user at the policy repository 18. In a preferred embodiment of the invention each logical instance has its own set of policies 108, 208. These policies are therefore unique to a logical instance and may not be accessed in relation to a request by a user associated with another logical instance.

The first logical instance has its own root policy 110, administrator credentials 112 and a general policy 114. In a preferred embodiment the policies 108 are signed by the administrator authoring each policy and have a state associated with them, for example committed, active, dormant etc, the management credentials 112 contain the information regarding the roles, identities, groups etc. of the policy administrator or administrators in the logical instance and a signed root policy 114 which comprises; i) the acceptable delegation of authority rules between identifiable administrators or management roles or groups, ii) specific circumstances under which new policies can be added, iii) a conflict resolving algorithm for overlapping policy sets, iv) restrictions on the content of the policies that can be accepted by an administrator(s). Therefore an administrator of the first logical instance is able to alter the policy set of the first logical instance 108 as in the prior art within the rules of the root policy 110. The restrictions of the root policy 110 in a preferred embodiment would typically restrict an administrator or user from being able to add policies outside of the scope of this logical instance. The segregation of the interfaces, storage, computational resources and the repository segment used by the first logical instance will restrict the administrator's actions or any policy deicision requests from accessing, or indirectly interfering with any another logical instances' policies 208 or resources 216..

A conflict resolving algorithm defines a set of rules to overcome any overlapping policies e.g. deny-overrides, allow-overrides etc. In a preferred embodiment a separate conflict resolving algorithm also deals with any resource allocation conflicts, whilst the invention allocates resources for a system, there are situations where a logical instance may require more resources 20 than it has been allocated. For example the first logical instance requires more RAM in the computational resources 120, and attempts to use some of the RAM allocated to the second logical instance 220. The conflict resolving algorithm in the second logical instance root policy 210 may allow for the logical instance to use some of the second logical instances resources 220. It also resolves any conflicts between administrators who may have the same privileges. The conflict resolving algorithm can form part of the root policy function.

The policies for the relevant logical instances are pushed along communication paths 107, 207 to the relevant PDPs 106, 206 and the resources 20 allocated. The allocated resources for the first logical instance 116 comprise storage 118 and computational resources 120. In other embodiments these resources may include any computational resources that may be used by the policy system. These are distinct from the network resources protected or managed by the policy system such as but not limited to printers, networks, displays, plotters etc.

As each interface group 100, 200 policy set 108, 208 and resource set 116, 216 for each logical instance are separate from other logical instances each logical instance has process and state isolation. In a preferred embodiment it is not possible for an administrator or management group of one instance to access the data of another group and or change their policies.

If a new logical instance of the system 10 were to occur it would have no associated PDP in the decision engine 16 or policies 18 or resources 20. In the preferred embodiment these are all described by the context which is determined by the Policy Decision Point factory 14.

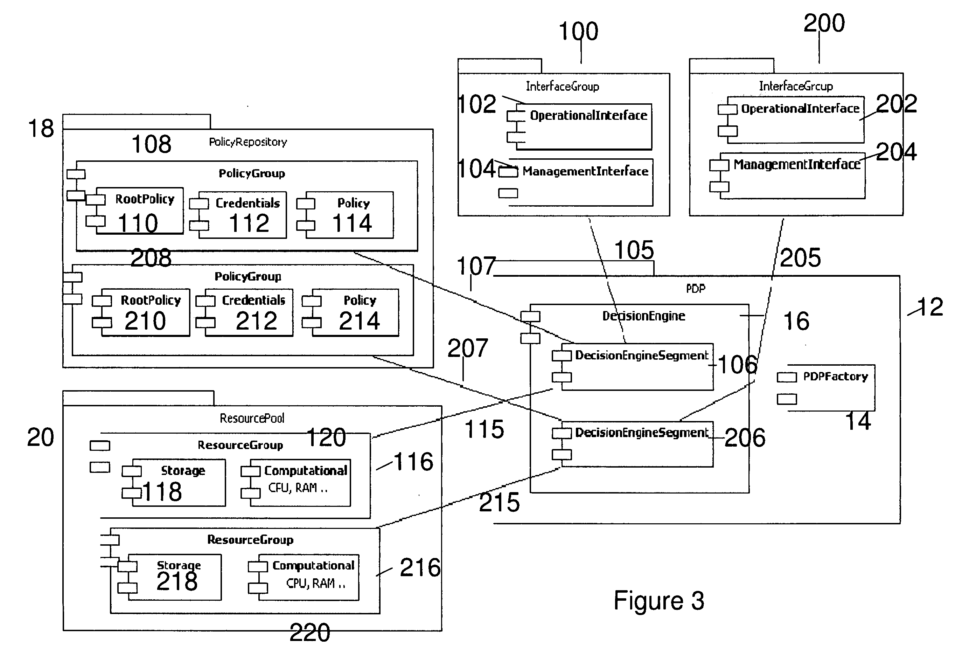

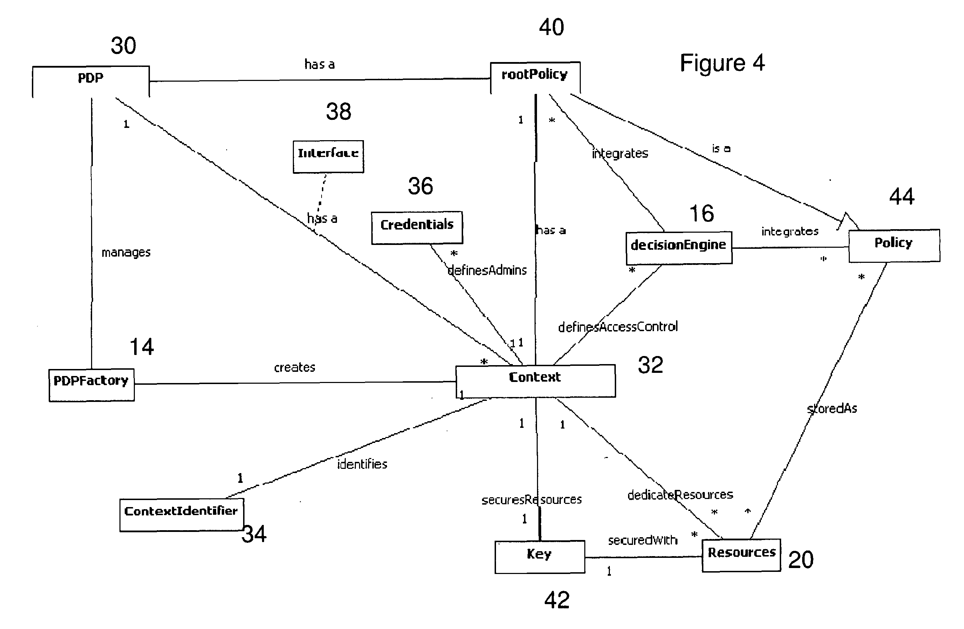

Each new logical instance is described by the context 32, as shown in figures 4, 5 and 6, which is assigned an identification which is preferably unique more preferably a universal unique identifier UUID. The context 32 defines the logical instance's PDP engine, policies and resources, such as memory space (e.g. RAM segment), CPU and computational storage (such as disk segment) and therefore ensures the state and process isolation for the logical instance. In a preferred embodiment a PPD instance for a context 32 is created by a factory pattern as the factory pattern allows for a coordinated creation of a PDP instance for a context 32 and ensures adequate allocation of the resources 20 and suitable policies 18. The factory pattern is implemented by the PDP factory 14 shown in figure 3.

Figure 3 shows the features of a context 32 for a new logical instance in the system 10. There is shown the features of the context 32 comprising; the PDP 30 Policy Decision Point factory 14, the decision engine 16, the context identifier 34, the context specific encryption key 42, the set of interfaces 38, the PDP decision engine 12 for the logical instance 30, the root policy 40, credentials 36, general policy 44 and associated resources.

As discussed with reference to Figure 3 each logical instance is associated with various features 30. The context 32 is identified by a context identifier 34, the context identifier 34 is preferably unique and preferably a UUID. This allows any repeated instance of a logical instance to be identified and the corresponding context 32 recovered. The context 32 also describes the interfaces 38 associated with the logical instance, the interfaces 38 comprise operational interfaces and management interfaces. The context 32 further defines the policies of the logical instance comprising the root policy 40, the credentials 36 and general policy 44 and the resources associated with the logical instance 46. As the context 32 is unique for each logical instance and is preferential uniquely identified by the context identifier 34 the resources and policies defined by the context 32 are separate for each logical instance thereby ensuring state and process segregation between each logical instance. To ensure further segregation between contexts, each context 32 is secured with a context specific encryption key 42. This encryption key can be a single shared secret (i.e. a symmetric key) or one of an asymmetric key-pair. In a preferred embodiment the encryption key 42 is unique for each logical instance. This key is used sign the root policy of a logical instance and may also to encrypt any policies stored at the segment of the policy repository segment associated with this logical instance. In a preferred embodiment each administrator of a logical instance is identifiable by a separate public key associated with the administrator's credentials (for example by means of a public key certificate). This is further ensuring that only the persons who are given the key which is preferentially defined in the credentials 36 and root policy 40 of the logical instance are able to access and change the credentials 36 and policies 44 of this instance 32. Furthermore, the encryption key 42 can created and bound by a known hardware module in the system, such as a trusted computer module.

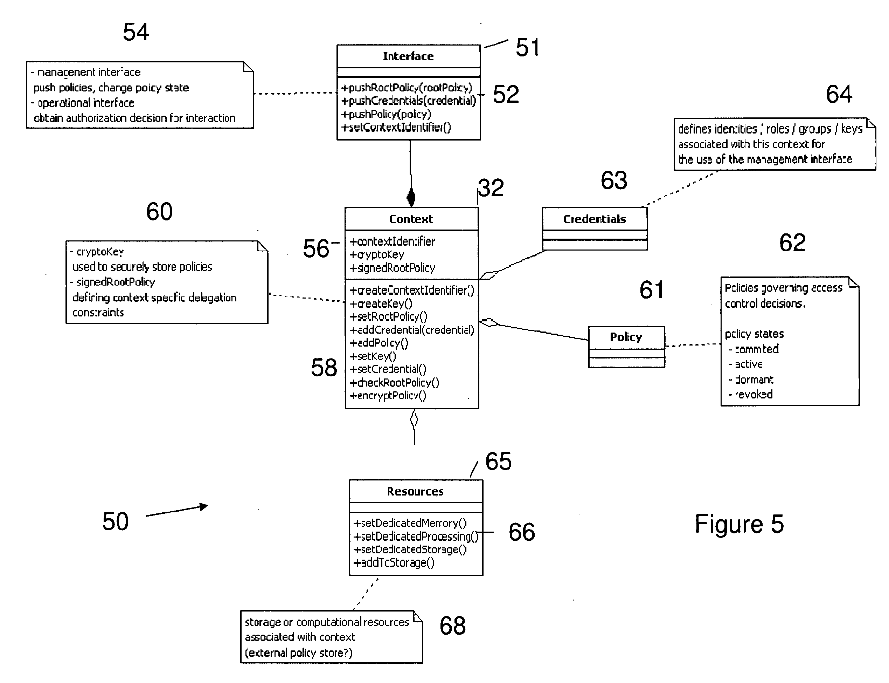

Figure 5 is another example of the features 50 of a context 32 and the steps to create a context in a preferred embodiment. There is shown the context 32, the context comprising the elements 56 and instructions 58 of its creation and further details 60 regarding the creation. The resources of the context 65, instructions for allocation of resources 66 and further detail 68, the policy 61 and the policy states 62, the logical instance credentials 63 and further details 64, and the interfaces associated with the logical instance 51 with the instructions pushed from the interface 52 and further details of the interface 54.

The interface 51 comprise the operational interface and management interface. The roles for the interfaces are defined in box 54. The operational interface is used to obtain the authorisation decisions from the PDP 16 and the management interface is used to push policies and change their state. The instructions 52 pushed by the interface 51 in a new logical instance contain in a preferred embodiment a root policy, a set of credentials and general policy which are required by the PDP factory 14 to create the context 32 and the context identifier 34.

The context 32 comprises the context identifier 34, the context specific encryption key 38 and root policy 210 which is preferentially signed. If the logical instance is known the context 32 compares the credentials supplied by the policy administrator to those associated with the logical instance 63 to verify the policy administrator. The credential details 64 comprise identities, roles, groups, encryption keys (42 in Figure 3) that are associated with the context and identify the administrators that can access the logical instance through the management interfaces 51.

If the input from an interface represents a new logical instance the context must be created with the instructions in box 54. In a preferred embodiment the first stage is to create the context identifier. The context identifier 34 is preferentially unique and a UUID. The context specific encryption key 42 is assigned and a root policy set, box 56 details these specific steps. The context specific encryption key 42 in a preferred embodiment is a key known in the art and is used to securely store the policies assigned to the context 32. In a preferred embodiment the root policy 210 pushed by the interface 51 is checked against a master set of policies (not shown), which defines the scope allowed for a root policy. If the pushed root policy is within the scope allowed, the root policy is signed using techniques known in the art. Furthermore, the root policy 210 defines context specific delegation constraints and preferentially a context specific conflict resolving algorithm. The credentials 63 and policies for the instance 61 that were pushed by the interface 51 are added to the context 32. In a preferred embodiment, the policy 61 is signed by its author. The signed policy 61 will be associated will the context only if it complies with the constraints put by the root policy, including that the signature of the policy 61 is successfully validated against the credentials 63, using signature validation algorithms as in prior art.

The root policy is checked and the policies of the context are encrypted with the context specific encryption key 42. The policy 61 is detailed in box 62 and preferentially contains rules to govern access control decisions. The policies are further associated with states to describe them e.g. committed, active, dormant, revoked. In a preferred embodiment an administrator as defined by the context specific credentials 63 may be able to change the policy states based on the root policy which preferentially contains i) circumstances under which new polices can be added ii) restrictions on the content of the policies that can be added and/or altered. The context 32 is also associated with computational resources 65, which are assigned according to the instructions 66. In a preferred embodiment each logical instance is allocated a dedicated memory, dedicated processing and dedicated storage. These are distinct from the network resources protected or managed by logical instance such as but not limited to printers, scanners, display units etc. may also be allocated.

The context definition is stored to some form of writeable memory. The context is identified with its UUID and any subsequent decision for the context is made against those policies in the context. Therefore, each logical instance has a unique contextualised PDP which is identifiable by the UUID and described by the associated context.

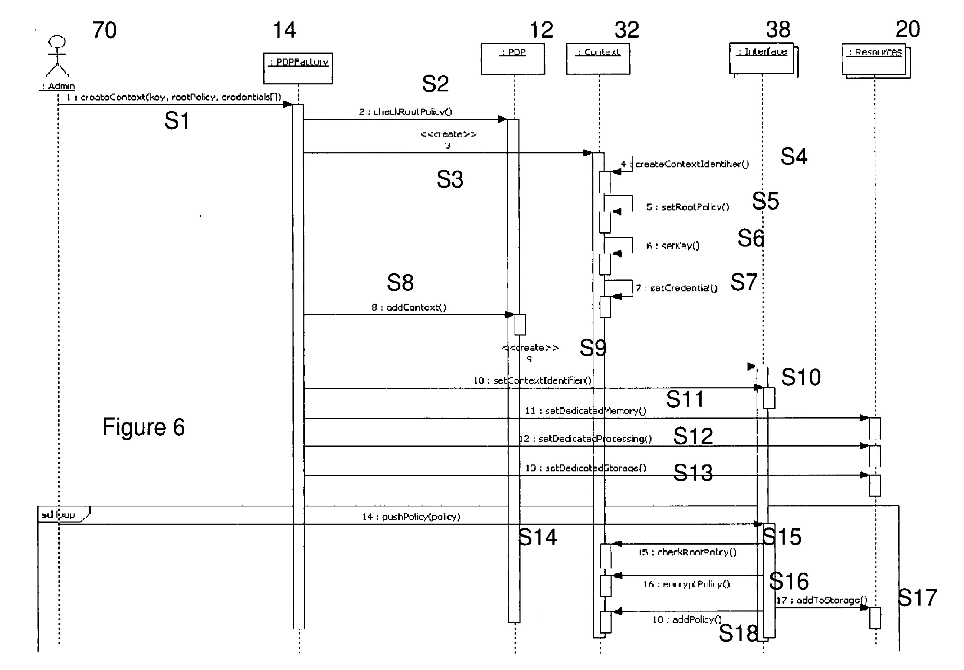

Figure 6 shows a further example of the steps of creation of a context. There is shown the initialising step S1, checking of the root policy S2, creation of the root policy S3, creation of the context identifier S4, set the root policy S5, set the encryption key S6, set of the credentials S7, adding the context to the PDP S8, creating the interfaces S9, setting the context identifier for the interface S10, setting the dedicated memory S11, setting the dedicated processors S12, setting the dedicated storage S13, the addition of a general policy S14, checking the root policy S 15, encrypting the policy S16, adding the policy to storage S17 and adding the policy S 18. There is also shown the PDP factory 14, the PDP 12, the context 32, interface 38 and resources 20 at the top of the figure and hence the communication links between these system components during this context creation process.

The process detailed in Figure 6 is the same as in Figure 5. An administrator initiates the creation of a context at step S1 by pushing to the PDP factory 14 an encryption key, root policy and credentials. The root policy is checked to see if policy falls within the restrictions of the policies of the system 12 at step S2 and if passed across to the context creation at step S3. The context identifier is created at step S4, which involves the setting of the policy at step S5, setting the encryption key at step S6 and setting the credentials at step S7. The created context is then added to the decision engine at step S8 thereby creating a contextualised PDP for the instance. The interfaces for the instance are created at step S9 and the context identifier for the interfaces set at step S10. The memory, processing and storage resources for the context are set at step S11, S 12 and S13 respectively. The administrator pushes the general policy to be added at step S 14, which is then checked against the accepted root policy at step S 15 to ensure that the policy is within the scope allowed. The policies are encrypted with the encryption key set in step S6 at step S 16 and the encrypted polices are written to the writeable memory at step S 17 and added to the context at step S 18. This process has thereby created a context which includes an encrypted set of policies, dedicated resources and a contextualised PDP for the logical instance.

It would be appreciated by those skilled in the art that the above examples of the creation of the context do not limit or restrain the features that are contained in a context 32. A context 32 in the present invention may contain some or all of the features and indeed may contain more features than those presented with reference to Figures 4 and 5.

Some advantages of the invention are shown by way of example only below. The features of the context 32 are given with reference to Figure 4.

In a situation when offering a hosting environment for example, web applications that allow clients to deploy and manage access to their applications remotely it is extremely important that the hosting environment ensures that different customers will not interfere with each other, i.e. by accidentally or intentionally gaining visibility or access to policies, traces or information outside of the scope of their own run time or policy execution. The invention protects the customers from each other, by improving the underlying security infrastructure by creating a contextualized Policy Decision Points 30 for each single customer. A logical instance in this example would be defined as the collection of policies, and policy system interfaces offered to, managed and used by a customer's administrator and their delegates, and that are executed in their dedicated memory and computational space, and are associated with controlling access to data and applications hosted on behalf of the customer.

Each logical instance would require the creation of a specific context which is identifiable by a UUID 34 for the instance and the creation of the contextualised PDP 30. In the example of a hosting environment a customer would sign up to the provider. Before the customer is able to deploy their application they would in a preferred embodiment provide;
- A signed root policy 40 that defines among others the conditions under which new policies can be added to the context. Such a root policy may contain "administrator (A) identified by digital signature (DS) is allowed to add / update / delete policies in domain (D) only within 20:00 and 03:00 hours" or "permissions statements by administrator (A) override permission statements by Administrator (B)." In other embodiments the user may choose to use an existing policy or supplement a known policy with features specific to their requirements.
- A set of credentials 36 that must be provided to authenticate and upload new policies into this context. Credentials could be a companies name, a username and password combination, hardware or software tokens, entitlements, a public key certificate or the digital signature of a company.
- A cryptographic key 42 that will be used to protect sensitive information associated with this context. In this example the key is a symmetric key of variable bit length, e.g. a shared secret between the customer and the PDP 30 that is associated with a particular context. In other embodiments any encryption key known in the art may also be used.

The information supplied by the user is processed by the PDP Factory 14 of the hosting environment to create a new segregated, contextualized realm in which the customer can deploy, manage and securely execute his application. The PDP factory 14 undertakes the following steps;
1. Consulting the master root policy of the decision engine (not shown) to verify the creation of a new context is allowed for the credentials supplied. For example, this could providing checking with a billing system to ensure that a credit card associated with the customer was debited successfully. If the root policy denies the request of the creation, the process ends here. This ensures that customers may context definitions which are outside the range of accepted contexts.
2. Generating a new context identifier 34 describing the association between the customer account and the segregated, contextualized fragment of the hosting environment. In a preferred embodiment this unique identifier is a UUID. A UUID is used to uniquely identify information without central coordination, and consists of 32 hexadecimal digits.
3. Associating the input parameters provided by the customer, i.e. root policy 40, credentials 36, and cryptographic key 42 with the context object and these associations are used in the subsequent steps of the creation process.
4. Allocating and assigning new objects from within the resource pool 46, the policy repository and the interface pool to this newly created context. These objects together with the context identifier 34 provide the underlying components to be used by the operational and management aspects of the contextualized PDP 30. These components comprise;
   a. Dedicated memory, storage and processing resources identified from the resource pool 20 and associated with the context identifier. The resources are used to store policies and execute the decision making processes of the PDP 3. They resources will be segregated and protected from other resource groups via means supported by the operating system or extensions such as the Trusted Computing Platform.
   b. A new policy group object 44 will be created to store the credentials and the provided root policy. Additionally the policy group object 44 would store any policy that is pushed to this context later on. The policy group 44 is protected using the cryptographic key 42 provided by the customer and stored in the storage resource allocated earlier. In a web hosting environment the policy group may be stored in an external database.
   c. New operational and management/ management interfaces 38 associated with this context. The management interface is used by the customer to push new policies and has a further mutual authentication platform between the host and the customer. The authentication system is known in the art and in the example given comprises a SSL platform.

The invention has therefore defined a contextualised PDP 30 which is defined by the context and uniquely identified via the UUID 58. The invention has also allocated the resources 46 for the customer and ensured their segregation from other customers in the same environment. The customer has access to their own policies and credentials and may wish to modify them. In the following example the customer wishes to update their policy regarding access control. The update comprises the steps of;
1. The customer pushing the updated policy and relevant encryption key to the management interface. The customer and the interface are mutual authenticated using cryptographic protocols such as a SSL platform.
2. Retrieving the policy group 44 associated with the interface from the storage resource. The policy group comprises the root policy, credentials and general operating policy and was encrypted during the creation of the context. The appropriate key provided by the customer is used to decrypt the policy group. If the key supplied is incorrect the policy group remains encrypted and the process ends. If successful, the decrypted root policy is consulted to verify that the credentials provided are sufficient to add new policies to this context or that the policies to be added are acceptable. If this is not the case the process ends here.
3. The newly pushed policy is then encrypted and added to the policy group 44 .
4. The policy group is then encrypted and updated in the storage resource.

Further embodiments of the invention include categorising the contextualised PDPs and context identifiers when they are stored. Any subsequent new logical instance may be categorised in the same manner as the existing PDPs and the contextualised PDP may be based on any similar instances, thereby ensuring the rapid creation of the contextualised PDP in that instance. Furthermore, other extensions may include instances of interfaces for publishing notifications regarding e.g. policy life-cycle events, resource usage etc. and a context-specific ontology for classifying such notifications.

## Claims

1. A method of ensuring one or more of state segregation, resource segregation, and process isolation for a logical instance in a policy based computer system, the method comprising the steps of;
creating a contextualised policy decision point for a logical instance within the policy based computer system,
creating a context identifier for the unique logical instance, which context identifier sufficiently characterises the logical instance to ensure at least one of state segregation, resource segregation, and process isolation.

2. A method according to claim 1 wherein each logical instance represents an associated use of a resource and the context identifier identifies one or more policies and or resources for the logical instance thereby enabling unique, segregated and or isolated use of the resources and or the policies, and/or further comprising the step of;
defining a segregated policy decision making process associated with a set of policies and segregated storage and computational resources that are exclusively used for the maintenance of policies and the execution of the policy decision making process.

3. A method according to claim 1 or 2 comprising the steps of defining an associated Policy Decision Point for each logical instance of the policy based system, and identifying each Policy Decision Point with a context identifier, which is associated with at least one of;
one or more sets of management credentials,
one or more sets of policies,
a computational resource,
an encryption key,
an interface instance, preferably comprising at least one management interface and at least one operational interface, and
a root policy.

4. A method of managing a policy based system by defining an associated Policy Decision Point for each logical instance of the policy based system, and identifying each Policy Decision Point with a context identifier, which is associated with at least one of;
one or more sets of management credentials,
one or more sets of policies,
computational resources preferably for the maintenance of these sets of policies and the execution of policy decision making processes for these policies,
an encryption key,
an interface instance, preferably comprising at least one management interface and at least one operational interface, and
a root policy,
further comprising the steps of defining the Policy Decision Point for the instance based on the context identifier, defining a system environment comprising resources and interfaces for each instance based on the context identifier of the associated Policy Decision Point, and resolving any policy decisions for each instance using the associated Policy Decision Point.

5. A method as claim 2 wherein the context identifier for each instance is associated with a Universally Unique Identifier.

6. A method of any of the preceding claims wherein the features associated with each context identifier are solely associated with said identifier.

7. A method of any of the preceding claims wherein a template such as a factory pattern is used to determine the associations of said context identifier.

8. A method of any of the preceding claims wherein said policies contain information regarding their status.

9. A method of any of the preceding claims wherein said resources associated with said context are processing and storage resources.

10. A method of any of the preceding claims wherein said context identifier is further associated with an encryption key that is unique.

11. A method of claim 10 wherein said encryption key is generated or bound to a known hardware module.

12. A method of any of the preceding claims wherein said root policy defines one or more of;
authority rules between administrators and/or users,
circumstances under which policies associated with the context identifier may be modified,
a policy conflict resolution mechanism,
restrictions of further policies that can be accepted by administrators.

13. A method of claim 10 wherein the root policy and preferably the other policies are encrypted with said encryption key.

14. A method of any preceding claim wherein a policy conflict resolution mechanism is provided

15. A method of any of the preceding claims where the context identifier is stored on a form of writeable memory.

16. A method of claim 15 where the context identifiers are stored on a database and are preferably categorised according to the associations described by the context identifiers.

17. A method of claim 16 wherein the database is able to be searched so that one or more context identifiers and/or similar context identifiers can be recovered, when identical and/or similar logical requests are made.

18. A method of claim 17 wherein part or all of the features associated with the recovered context identifiers, if any, are duplicated and said duplicates are associated with the context identifier of the request.

19. Apparatus for a policy based computer system comprising a set of computer resources including memory and processors, one or more associated Policy Decision Points wherein;
each logical instance of the system is associated with a contextualised Policy Decision Point which is associated with a context identifier,
the context identifier further associated with a set of policies and computer resources that are unique to the logical instance are preferably exclusively used for performing the tasks of policy decision making for this logical instance and are isolated from each other,
and preferably wherein the context identifier may be further associate with a set of business transactions or a set of users or a set of network resources or any combination of these on which the policies of that logical instance may apply.

20. Apparatus according to claim 19 wherein the context identifier comprises one or more of;
a set of management credentials,
a state associated with the context,
computational resources preferably including those used for the maintenance of these sets of policies and the execution of policy decision making processes for these policies,
a plurality interface instances comprising at least one management interface and at least one operational interface,
a root policy,

21. Apparatus according to claim 19 or 20 wherein the context identifier is created by means of a factory pattern.

22. Apparatus as to any one in claims 19 to 21 wherein a cryptographic key is produced by one of the resources.

23. Apparatus as to any one of in claims 17 to 22 further comprising a display device which is configured to display one or more of the interfaces that are preferably exclusively associated with the logical instance.

24. Apparatus as to any one of claims 19 to 23 wherein the display device is configured to display information regarding the policy event and preferably resource usage.

25. A computer program product having encoded thereon computer readable instructions which instructions when implemented by a computer system enable a method according to one or more of claims 1 to 18 and/or produce the system of claims 19 to 24.
